# EUROPEAN PATENT SPECIFICATION

(11) **EP 2 706 249 B1**
(45) Date of publication and mention of the grant of the patent: **04.05.2016**
(21) Application number: 13183294.1
(22) Date of filing: 06.09.2013
(51) Int. Cl.: F16C 33/46, F16C 19/36

(54) **Resin cage and roller bearing**
Harzkäfig und Rollenlager
Cage de résine et palier à rouleaux

(30) Priority: 11.09.2012 JP 2012199677
(43) Date of publication of application: 12.03.2014
(73) Proprietor: JTEKT CORPORATION, Osaka-shi Osaka 542-8502 (JP)
(72) Inventor: Fukuda, Shinji, Osaka-shi, Osaka 542-8502 (JP)
(74) Representative: TBK

(56) References cited:
- EP-A2- 1 757 823
- DE-A1- 19 833 436
- GB-A- 2 329 942
- JP-A- 2005 069 282

## Description

### BACKGROUND OF THE INVENTION

### 1. Field of the Invention

The present invention relates to a resin cage and a roller bearing.

### 2. Description of Related Art

Conventionally, as an example of a roller bearing, there is a tapered roller bearing described in Japanese Patent Application Publication JP 2010-091007 A. The tapered roller bearing includes a metal cage, and the metal cage includes a small diameter annular portion, a large diameter annular portion having a diameter larger than a diameter of the small diameter annular portion, and a plurality of bar portions. The bar portions are spaced from each other in a circumferential direction of the small diameter annular portion. The bar portions connect the small diameter annular portion with the large diameter annular portion.

There are pockets in which tapered rollers are respectively arranged, and each of the pockets is defined between the bar portions that are adjacent to each other in the circumferential direction. The bar portions have roller guide surfaces that face the pockets, and some of the roller guide surfaces have inclined surface portions that are formed so that a distance between the opposed inclined surface portions gradually increases toward an inner side in a radial direction. In the above-described conventional tapered roller bearing, the tapered rollers are stably guided by the above-described inclined surface portions of the cage.

However, in the above-described conventional tapered roller bearing, since the cage is made of a metal, an impact load caused by the weight of the cage may become large due to the large mass of the cage, and as a result, the cage may be broken.

The inventor of the present invention has found that the following problem is caused in a case where a resin cage is used in order to settle the problem that the metal cage may be broken due to the weight of the metal cage.

Namely, the inventor has found that, in a case where inclined surface portions are formed on bar portions of the resin cage so that a distance between the opposed inclined surface portions increases toward an inner side in a radial direction, and rollers are guided only by the inclined surface portions, as in the metal cage, each of the rollers is brought to an innermost position in the cage due to elasticity of the resin cage when the roller is present around a position at which an advancing direction of the roller coincides with a vertically downward direction. Thus, the rollers cannot be stably retained.

DE 198 33 436 A1 discloses a hub unit having a conical roller bearing with inner race, outer race with holder projecting from it and several rollers held in position by a cage in the rolling position between the races. In the cage, a bar portion can have a radial upper straight portion and a radial lower straight portion. Both a straight portions serve for holding the roller at the end position thereof in the radial direction. The radial lower portion can be a radial lower curved portion. The radial lower portion has a radial inner end which is directed towards the pocket to form a restriction not allowing the roller coming out of the pocket.

GB 2 329 942 A discloses a resin cage that has a bar portion having a radial upper curved portion and a radial lower straight portion. A further straight portion is a chamfered edge serves for handling grease. In a pocket, opposite radial lower straight portions are parallel to each other. Severe friction between the opposite radial lower straight portions with the roller shall be avoided thereby.

JP 2005 069282 A discloses a cylindrical roller bearing comprising an inner ring having a racetrack, an outer ring having a racetrack, cylindrical rollers, and a holder. In the holder, a bar portion has a curved portion and a small lower straight portion at the radial inner side of the curved portion.

EP 1 757 823 A2 discloses a tapered roller bearing. A bar portion has a straight surface; and another bar portion has a curved surface.

### SUMMARY OF THE INVENTION

An object of the present invention is to provide a resin cage in which rollers are restrained from being brought to an innermost position, and thus the rollers are stably guided. Further, a roller bearing shall be provided.

With respect to the resin cage, the above object is solved by a resin cage having the features of claim 1. A further development is stated in claim 2. A roller bearing is stated in claim 3.

### BRIEF DESCRIPTION OF THE DRAWINGS

The foregoing and further features and advantages of the invention will become apparent from the following example embodiments with reference to the accompanying drawings, wherein like numerals represent like elements, and wherein:
FIG. 1 is a sectional view of a tapered roller bearing as an embodiment of a roller bearing according to the present invention, the sectional view being taken along an axial direction;
FIG. 2 is a perspective view illustrating an inner ring, tapered rollers and a cage in a state in which the tapered roller bearing supports a horizontal shaft that extends horizontally (not shown);
FIG. 3 is a schematic sectional view of the cage which is taken along a radial direction, and which passes through only a bar portion and illustrates a shape of a roller guide surface of the bar portion, the roller guide surface facing a pocket;
FIG. 4 is a schematic sectional view of the cage which is taken along the radial direction, and which illustrates a portion at which a tapered roller is located in the pocket of the cage when the tapered roller is present at an upper position in a vertical direction as shown in A in FIG. 2;
FIG. 5 is a schematic sectional view of the cage which is taken along the radial direction, and which illustrates a portion at which the tapered roller is located in the pocket of the cage when the tapered roller is present around an intermediate position between the upper position in the vertical direction and a horizontal position (an intermediate position between the upper position and the lower position in the vertical direction) as shown in B in FIG. 2; and
FIG. 6 is a schematic sectional view of the cage which is taken along the radial direction, and which illustrates a portion at which the tapered roller is located in the pocket of the cage when the tapered roller is present around the horizontal position as shown in C in FIG. 2.

### DETAILED DESCRIPTION OF EMBODIMENTS

Hereinafter, the present invention will be described in detail with reference to an embodiment illustrated in the accompanying drawings.

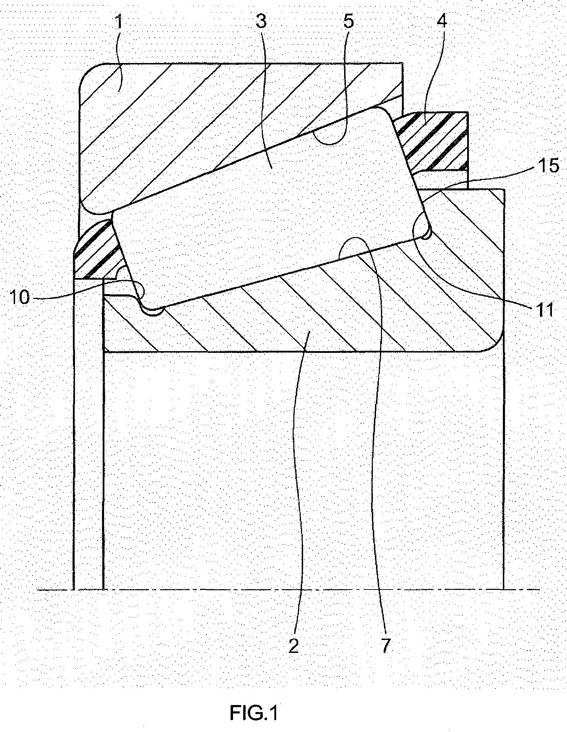

FIG. 1 is a sectional view of a tapered roller bearing as an embodiment of a roller bearing according to the present invention, the sectional view being taken along an axial direction.

As shown in FIG. 1, the tapered roller bearing includes an outer ring 1, an inner ring 2, a plurality of tapered rollers 3 and a resin cage 4. The outer ring 1 has an inner peripheral tapered raceway surface 5. On the other hand, the inner ring 2 has an outer peripheral tapered raceway surface 7. The inner ring 2 has a small rib face 10 at a small diameter-side end of the outer peripheral tapered raceway surface 7, and has a large rib face 11 at a large diameter-side end of the outer peripheral tapered raceway surface 7.

The tapered rollers 3 are spaced from each other in a circumferential direction in a state in which the tapered rollers are retained by the cage 4 between the inner peripheral tapered raceway surface 5 of the outer ring 1 and the outer peripheral tapered raceway surface 7 of the inner ring 2. The large rib face 11 of the inner ring 2 guides large diameter end faces 15 of the tapered rollers 3 during operation of the tapered roller bearing.

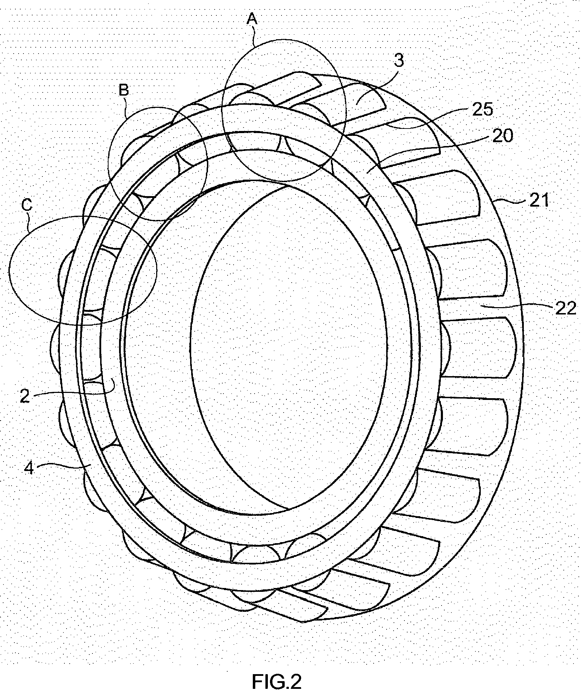

FIG. 2 is a perspective view illustrating the inner ring 2, the tapered rollers 3 and the cage 4 in a state in which the tapered roller bearing supports a horizontal shaft that extends horizontally (not shown).

As shown in FIG. 2, the cage 4 has a small diameter annular portion 20 as a first annular portion, a large diameter annular portion 21 as a second annular portion, and a plurality of bar portions 22. The bar portions 22 are spaced from each other in a circumferential direction of the small diameter annular portion 20. The bar portions 22 connect the small diameter annular portion 20 with the large diameter annular portion 21. As shown in FIG. 2, the cage 4 has pockets 25 each of which is defined between the bar portions 22 that are adjacent to each other in the circumferential direction, and the tapered rollers 3 are disposed respectively in the pockets 25.

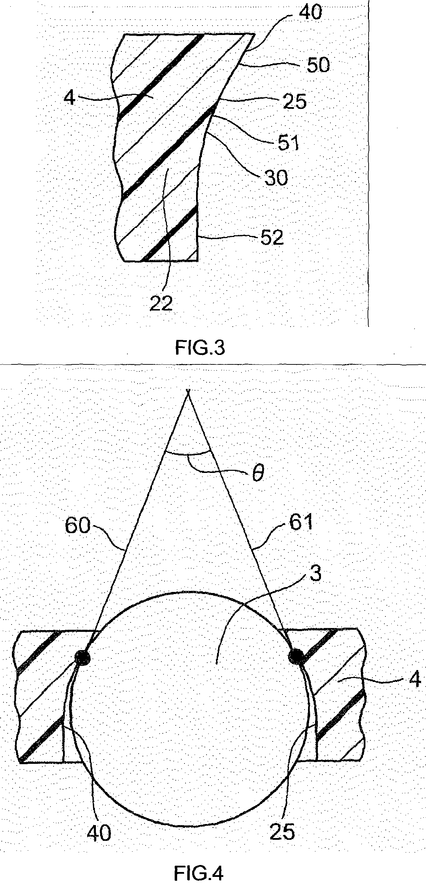

FIG. 3 is a schematic sectional view of the cage 4 which is taken along a radial direction, and which passes through only the bar portion 22 and illustrates a shape of a roller guide surface 40 of the bar portion 22, the roller guide surface 40 facing the pocket 25.

As shown in FIG. 3, in this cage 4, the roller guide surface 40 of each of the bar portions 22 has a straight first portion 50, a curved second portion 51 and a straight third portion 52, in the section of the cage 4 which is taken along the radial direction, and which passes through only the bar portion 22.

In the section taken along the radial direction, the second portion 51 is smoothly (i.e., in a differentiable manner) connected to an inner side end portion of the first portion 50 in the radial direction. The second portion 51 is composed of a curve that protrudes toward a side opposite to the pocket 25 in the circumferential direction, in the section. Further, in the section, the third portion 52 is smoothly (i.e., in a differentiable manner) connected to an inner side end portion of the second portion 51 in the radial direction.

FIG. 4 is a schematic sectional view of the cage 4 which is taken along the radial direction, and which illustrates a portion at which the tapered roller 3 is located in the pocket 25 of the cage 4 when the tapered roller 3 is present at an upper side in a vertical direction as shown in A in FIG. 2. It is to be noted that black circle marks shown in FIG. 4 indicate positions on the roller guide surfaces 40, at which the tapered roller 3 contacts the roller guide surfaces 40.

As shown in FIG. 4, in the section of the cage 4 taken along the radial direction, an extension line 60 extending outward in the radial direction from one of the first portions 50 that are opposed to each other across the pocket 25 in the circumferential direction, and an extension 61 extending outward in the radial direction from the other of the first portions 50 cross each other so as to form a vertex angle (indicated by θ in FIG. 4) that is equal to or larger than 35 degrees, and equal to or smaller than 55 degrees.

At the position at which the tapered roller 3 is present at the upper side in the vertical direction as shown in A in FIG. 2, the cage 4 is moved downward by the weight of the cage 4, and accordingly, the tapered roller 3 is moved upward relative to the cage 4. At this position, as shown in FIG. 4, the tapered roller 3 is held between the two first portions 50 that are opposed to each other across the pocket 25. Thus, the tapered roller 3 cannot move outward in the radial direction from the pocket 25, and accordingly, it is possible to prevent the tapered roller 3 from coming off the pocket 25.

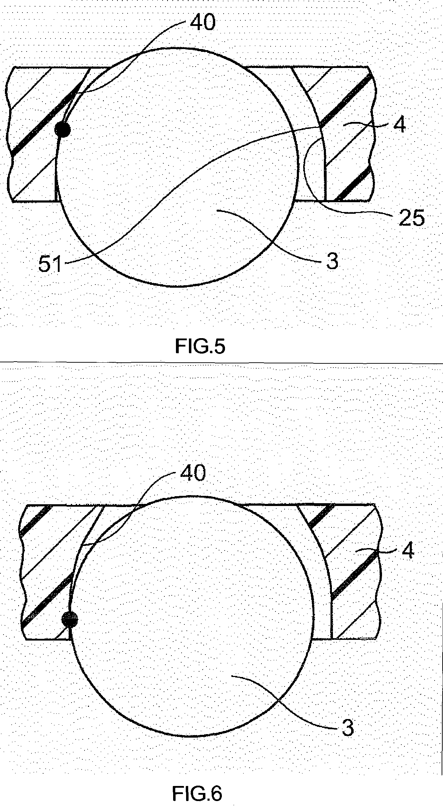

FIG. 5 is a schematic sectional view of the cage 4 which is taken along the radial direction, and which illustrates a portion at which the tapered roller 3 is located in the pocket 25 of the cage 4 when the tapered roller 3 is present around an intermediate position between the upper position in the vertical direction and a horizontal position (intermediate position between the upper position and a lower position in the vertical direction), as shown in B in FIG. 2. It is to be noted that a black circle mark in FIG. 5 indicates a position on the roller guide surface 40, at which the tapered roller 3 contacts the roller guide surface 40.

In the section which is taken along the radial direction, and which passes through only the bar portion 22 in a state in which the tapered roller 3 is accommodated in the pocket 25, the second portion 51 has a curvature radius that is equal to or larger than 1.01 times, and equal to or smaller than 1.03 times a radius of the tapered roller 3 in the section.

As described above, in the section, the second portion 51 has the curvature radius that is equal to or larger than 1.01 times, and equal to or smaller than 1.03 times the radius of the tapered roller 3. In addition, the second portion 51 is smoothly connected to the inner side end portion of the first portion 50 in the radial direction. Due to this, as the position of the tapered roller 3 changes from the upper position in the vertical direction to the horizontal position, the tapered roller 3 is successively moved on the first portion 50, the second portion 51 and the third portion 52, and thus, the tapered roller 3 is moved from the first portion 50 to the third portion 52, while one-point contact between the tapered roller 3 and the bar portion 22 is maintained.

Further, as shown in FIG. 5, when the tapered roller 3 is present around the intermediate position shown in B as described above, the tapered roller 3 makes one-point contact with only the second portion 51 of one of the two bar portions 22 that are opposed to each other across the pocket 25.

FIG. 6 is a schematic sectional view of the cage 4 which is taken along the radial direction, and which illustrates a portion at which the tapered roller 3 is located in the pocket 25 of the cage 4 when the tapered roller 3 is present around the horizontal position as shown in C in FIG. 2. It is to be noted that a black circle mark in FIG. 6 indicates a position on the roller guide surface 40, at which the tapered roller 3 contacts the roller guide surface 40.

In the section which is taken along the radial direction, and which passes through only the bar portions 22 in the state in which the tapered roller 3 is accommodated in the pocket 25, a distance between one of the third portions 52 that are opposed to each other across the pocket 25 in the circumferential direction and the other of the third portions 52 is larger than a diameter of the tapered roller 3 in the section.

Further, when the tapered roller 3 is present around the horizontal position indicated by C in FIG. 2, the tapered roller 3 is advanced in the circumferential direction so as to receive a circumferential force from the cage 4. However, in this case, the tapered roller 3 makes one-point contact with only the third portion 52 of one of the two bar portions 22 that are opposed to each other across the pocket 25.

Further, in the section of the cage 4 taken along the radial direction shown in FIG. 6, each of the third portions 52 is substantially parallel to a straight line that passes through a center of the pocket 25 and that extends in the radial direction.

According to the above-described embodiment, in the section of the cage 4 which is taken along the radial direction, the extension lines 60, 61 extending outward in the radial direction from the two straight first portions 50 that are opposed to each other across the pocket 25 cross each other so as to form a vertex angle that is equal to or larger than 35 degrees, and equal to or smaller than 55 degrees. Further, the second portion 51 smoothly connected to the inner side end portion of the first portion 50 in the radial direction is the curve having the curvature radius that equal to or larger than 1.01 times, and equal to or smaller than 1.03 times the radius of the tapered roller 3 in each section taken along the radial direction. In view of the foregoing, the tapered roller 3, which is moved outward in the radial direction in the pocket 25 relative to the cage 4 due to the downward movement of the cage 4 in the vertical direction caused by the weight of the cage 4, can be held between the two first portions 50 that are opposed to each other across the pocket 25. Thus, it is possible to prevent the tapered roller 3 from coming off outward in the radial direction.

Further, according to the above-described embodiment, in the section taken along the radial direction, the straight third portion 52 is connected to the straight first portion 50 with the smoothly curved second portion 51 being interposed between the straight first portion 50 and the straight third portion 52. Thus, when the tapered roller 3 is present around the horizontal position where the advancing direction of the tapered roller 3 coincides with the vertically downward direction, and the tapered roller 3 contacts the third portion 52, a line segment connecting a contact point, at which the tapered roller 3 contacts the third portion 52, with the center of the tapered roller 3 crosses the straight third portion 52 at an angle that is close to 90 degrees in the section taken along the radial direction. Thus, when the tapered roller 3 is present around the horizontal position where the advancing direction of the tapered roller 3 coincides with the vertically downward direction, the tapered roller 3 can be restrained from being brought to an innermost position in the cage 4. Thus, it is possible to stably guide the tapered rollers 3 by the cage 4.

Further, according to the above-described embodiment, the straight first portion 50 is connected to the straight third portion 52 through the curved second portion 51 having the curvature radius that is slightly larger than the radius of the tapered roller 3. Thus, during the process in which the contact point of the tapered roller 3 is shifted from the first portion 50 to the third portion 52, the tapered roller 3 can make one-point contact with the second portion 51, and accordingly, it is possible to prevent the tapered roller 3 from making two-point contact with the first portion 50 and third portion 52. Thus, it is possible to ensure that the tapered rollers 3 smoothly roll, and accordingly, it is possible to obtain higher bearing load-carrying capacity.

If the straight first portion 50 is directly connected to the straight third portion 52 so as to form a polygonal line, without interposing the second portion 51 between the straight first portion 50 and the straight third portion 52, the tapered roller 3 may make two-point contact with the first portion 50 and the third portion 52. In this case, the force of the cage 4 for restraining the tapered rollers 3 becomes larger, and accordingly, the cage 4 exerts a large braking force on the tapered rollers 3. This makes it impossible for the tapered rollers 3 to smoothly roll.

Namely, regardless of the circumferential position at which the tapered roller 3 is located, the tapered roller 3, which contacts the cage 4, can be prevented from making contact with two or more of the three surfaces, that is, the first portion 50, the second portion 51 and the third portion 52 that serve as a guide surface. Thus, the tapered roller 3 can be smoothly guided by the optimum surface among the first portion 50 serving as a cage inner inclined surface, the third portion 52 serving as a roller advancing direction guide surface and the second portion 51 serving as a joint rounded surface.

Further, according to the above-described embodiment, each of the third portions 52 is parallel to the straight line that passes through the center of the pocket 25 and that extends in the radial direction, in the above-described section taken along the radial direction. Thus, in the above-described section, the line segment connecting the contact point, at which the tapered roller 3 contacts the third portion 52, with the center of the tapered roller 3 crosses the straight third portion 52 at an angle that is close to approximately 90 degrees. Accordingly, it is possible to substantially minimize the force for bringing the tapered roller 3 to an innermost position in the cage 4. Thus, it is possible to guide the tapered rollers 3 more stably.

In the above-described embodiment, the rolling elements are the tapered rollers 3. However, in the present application, the rolling elements may be cylindrical rollers, or convex rollers (spherical rollers).

Further, in the above-described embodiment, each of the third portions 52 is substantially parallel to the line that passes through the center of the pocket 25 and that extends in the radial direction, in the section of the cage 4 taken along the radial direction. However, in the present invention, the third portion 52 may have any shape, as long as the third portion 52 is smoothly connected to the inner side end portion of the second portion 51 in the radial direction, and has a straight line shape. When these conditions are satisfied, the tapered roller 3 can be restrained from being brought to an innermost position in the cage 4.

It is to be noted that the cage according to the present invention is appropriately used in a roller bearing which supports an axle of a railway vehicle, and in which a metal cage is currently used in general, and the cage oscillates due to frequent vibrations. In addition, it goes without saying that the roller bearing in which the cage according to the present invention is used is not limited to the above-described roller bearing, and the cage according to the present invention may be used in roller bearings for any purposes, such as a roller bearing that supports a main shaft of a wind power generator and a roller bearing that supports a pinion shaft of a differential gear.

Further, although the resin cage according to the present invention can be appropriately formed by injection molding, needless to say, the method of forming the resin cage according to the present invention should not be limited to this injection molding.

According to the present invention, it is possible to realize the resin cage in which the rollers are restrained from being brought to the innermost position in the cage, and the rollers are stably guided.
In a section of a cage taken along a radial direction, each of tapered roller guide surfaces of bar portions, which face pockets, includes a straight first portion; a curved second portion having a curvature radius that is equal to or larger than 1.01 times and equal to or smaller than 1.03 times a radius of a tapered roller in the section; and a straight third portion. In the section, extension lines of the two first portions that are opposed to each other across the pocket in the circumferential direction form a vertex angle that is equal to or larger than 35 degrees, and equal to or smaller than 55 degrees. In the section, a distance between the two third portions that are opposed to each other across the pocket in the circumferential direction is larger than a diameter of the tapered roller in the section.

## Claims

1. A resin cage (4) comprising:
a first annular portion (20);
a second annular portion (21) opposed to the first annular portion (20) in an axial direction of the first annular portion (20);
a plurality of bar portions (22) spaced from each other in a circumferential direction of the first annular portion (20), and connecting the first annular portion (20) with the second annular portion (21); and
rollers (3),
wherein the resin cage (4) has pockets (25) each of which is defined between the bar portions (22) adjacent to each other in the circumferential direction, and the rollers (3) are respectively disposed in the pockets (25),
wherein the bar portions (22) have roller guide surfaces (40) facing the pockets (25), and each of the roller guide surfaces (40) includes in a radial direction:
a straight first portion (50) holding the roller (3) on a radial outer side of the pocket (25) so that the roller (3) cannot move outward in the radial direction from the pocket (25);
a curved second portion (51) holding the roller (3) in an intermediate position between the radial outer side and an radial inner side of the pocket (25), said curved second portion (51) being smoothly connected to an inner side end portion of the first portion (50) in the radial direction, the second portion (51) having a curvature radius that is equal to or larger than 1.01 times, and equal to or smaller than 1.03 times a radius of the roller (3) in the section, and the second portion (51) protruding toward a side opposite to the pocket (25) in the circumferential direction; and
a straight third portion (52) holding the roller (3) on the radial inner side of the pocket (25), said straight third portion (52) being smoothly connected to an inner side end portion of the second portion (51) in the radial direction, **characterised in that**
an extension line extending outward in the radial direction from one of the first portions (50) that are opposed to each other across the pocket (25) in the circumferential direction, and an extension line extending outward in the radial direction from the other of the first portions (50) cross each other so as to form a vertex angle that is equal to or larger than 35 degrees, and equal to or smaller than 55 degrees, and
wherein a distance between one of the third portions (52) that are opposed to each other across the pocket (25) in the circumferential direction and the other of the third portions (52) is larger than a diameter of the roller (3) in the section.

2. The resin cage (4) according to claim 1, wherein in the section, each of the third portions (52) is substantially parallel to a straight line that passes through a center of the pocket (25), and that extends in the radial direction.

3. A roller bearing comprising:
an outer ring (1) having a raceway surface (5);
an inner ring (2) having a raceway surface (7);
a plurality of the rollers (3) disposed between the raceway surface (5) of the outer ring (1) and the raceway surface (7) of the inner ring (2); and
the resin cage (4) according to claim 1 or 2, the resin cage (4) retaining the rollers (3).

## Patentansprüche

1. Harzkäfig (4) mit:
einem ersten ringartigen Abschnitt (20);
einem zweiten ringartigen Abschnitt (21), der zu dem ersten ring-artigen Abschnitt (20) in einer axialen Richtung des ersten ringartigen Abschnittes (20) gegenübersteht;
einer Vielzahl an Stababschnitten (22), die voneinander in einer Umfangsrichtung des ersten ringartigen Abschnittes (20) beabstandet sind und den ersten ringartigen Abschnitt (20) mit dem zweiten ringartigen Abschnitt (21) verbinden; und
Rollen (3),
wobei der Harzkäfig (4) Taschen (25) hat, von denen jede zwischen den Stababschnitten (22) benachbart zueinander in der Umfangsrichtung hat, und die Rollen (3) jeweils in den Taschen (25) angeordnet sind,
wobei die Stababschnitte (22) Rollenführungsflächen (40) haben, die den Taschen (25) zugewandt sind, und wobei jede der Rollenführungsflächen (40) in einer radialen Richtung Folgendes aufweist:
einen geraden ersten Abschnitt (50), der die Rolle (3) an einer radialen äußeren Seite der Tasche (25) so hält, dass die Rolle (3) nicht nach außen in der radialen Richtung von der Tasche (25) sich bewegen kann;
einen gekrümmten zweiten Abschnitt (51), der die Rolle (3) in einer Zwischenposition zwischen der radial äußeren Seite und der radial inneren Seite der Tasche (25) hält, wobei der gekrümmte zweite Abschnitt (51) mit einem Innenseitenendabschnitt des ersten Abschnittes (50) in der radialen Richtung sanft verbunden ist, wobei der zweite Abschnitt (51) einen Krümmungsradius hat, der gleich wie oder größer als das 1,01-fache und gleich wie oder geringer als das 1,03-fache eines Radius der Rolle (3) in dem Abschnitt hat, und der zweite Abschnitt (51) zu einer Seite vorragt, die zu der Tasche (25) in der Umfangsrichtung entgegengesetzt ist; und
einen geraden dritten Abschnitt (52), der die Rolle (3) an der radial inneren Seite der Tasche (25) hält, wobei der gerade dritte Abschnitt (52) mit einem Innenseitenendabschnitt des zweiten Abschnittes (51) in der radialen Richtung sanft verbunden ist,
**dadurch gekennzeichnet, dass**
eine Verlängerungslinie, die in der radialen Richtung von einem der ersten Abschnitte (50), die einander über die Tasche (25) in der Umfangsrichtung gegenüber stehen, nach außen verlängert ist, und eine Verlängerungslinie, die nach außen in der radialen Richtung von dem anderen der ersten Abschnitte (50) verlängert ist, sich einander so kreuzen, dass sie einen Scheitelwinkel bilden, der gleich wie oder größer als 35° ist und gleich wie oder kleiner als 55° ist, und
wobei ein Abstand zwischen einem der dritten Abschnitte (52), die zueinander über die Tasche (25) in der Umfangsrichtung entgegengesetzt sind, und dem anderen der dritten Abschnitte (52) größer ist als ein Durchmesser der Rolle (3) in dem Abschnitt.

2. Harzkäfig (4) gemäß Anspruch 1, wobei in dem Abschnitt jeder der dritten Abschnitte (52) im Wesentlichen parallel zu einer geraden Linie ist, die durch eine Mitte der Tasche (25) tritt und die sich in der radialen Richtung erstreckt.

3. Rollenlager mit:
einem äußeren Ring (1) mit einer Laufringfläche (5);
einem inneren Ring (2) mit einer Laufringfläche (7);
einer Vielzahl an Rollen (3), die zwischen der Laufringfläche (5) des äußeren Ringes (1) und der Laufringfläche (7) des inneren Ringes (2) angeordnet sind; und
dem Harzkäfig (4) gemäß Anspruch 1 oder 2, wobei der Harzkäfig (4) die Rollen (3) hält.

## Revendications

1. Cage de résine (4) comprenant :
une première partie annulaire (20) ;
une seconde partie annulaire (21) opposée à la première partie annulaire (20) dans une direction axiale de la première partie annulaire (20) ;
une pluralité de parties de barre (22) espacées les unes des autres dans une direction circonférentielle de la première partie annulaire (20) et raccordant la première partie annulaire (20) avec la seconde partie annulaire (21) ; et
des rouleaux (3),
dans laquelle la cage de résine (4) a des poches (25), dont chacune est définie entre les parties de barre (22) adjacentes les unes par rapport aux autres dans la direction circonférentielle, et les rouleaux (3) sont respectivement disposés dans les poches (25),
dans laquelle les parties de barre (22) ont des surfaces de guidage de rouleau (40) faisant face aux poches (25), et chacune des surfaces de guidage de rouleau (40) comprend, dans une direction radiale :
une première partie droite (50) maintenant le rouleau (3) d'un côté externe radial de la poche (25) de sorte que le rouleau (3) ne peut pas se déplacer vers l'extérieur dans la direction radiale à partir de la poche (25) ;
une deuxième partie incurvée (51) maintenant le rouleau (3) dans une position intermédiaire entre le côté externe radial et un côté interne radial de la poche (25), ladite deuxième partie incurvée (51) étant régulièrement raccordée à une partie d'extrémité latérale interne de la première partie (50) dans la direction radiale, la deuxième partie (51) ayant un rayon de courbure qui est égal ou supérieur à 1,01 fois et égal ou inférieur à 1,03 fois un rayon du rouleau (3) dans la section, et la deuxième partie (51) faisant saillie vers un côté opposé à la poche (25) dans la direction circonférentielle ; et
une troisième partie droite (52) maintenant le rouleau (3) du côté radial interne de la poche (25), ladite troisième partie droite (52) étant régulièrement raccordée à une partie d'extrémité latérale interne de la deuxième partie (51) dans la direction radiale, **caractérisé en ce que**
une ligne d'extension s'étendant vers l'extérieur dans la direction radiale à partir de l'une des premières parties (50) qui sont opposées entre elles sur la poche (25) dans la direction circonférentielle, et une ligne d'extension s'étendant vers l'extérieur dans la direction radiale à partir de l'autre des premières parties (50), se croisent afin de former un angle de sommet qui est égal ou supérieur à 35 degrés et égal ou inférieur à 55 degrés, et
dans laquelle une distance entre l'une des troisièmes parties (52) qui sont opposées entre elles sur la poche (25) dans la direction circonférentielle et l'autre des troisièmes parties (52) est supérieure à un diamètre du rouleau (3) dans la section.

2. Cage de résine (4) selon la revendication 1, dans laquelle dans la section, chacune des troisièmes parties (52) est sensiblement parallèle à une ligne droite qui passe à travers un centre de la poche (25) et qui s'étend dans la direction radiale.

3. Palier à rouleaux comprenant :
une bague externe (1) ayant une surface de chemin de roulement (5) ;
une bague interne (2) ayant une surface de chemin de roulement (7) ;
une pluralité de rouleaux (3) disposés entre la surface de chemin de roulement (5) de la bague externe (1) et la surface de chemin de roulement (7) de la bague interne (2) ; et
la cage de résine (4) selon la revendication 1 ou 2, la cage de résine (4) retenant les rouleaux (3).
